(19) Europäisches Patentamt
European Patent Office
Office européen des brevets

(11) **EP 1 632 690 B1**

(12) **EUROPÄISCHE PATENTSCHRIFT**

(45) Veröffentlichungstag und Bekanntmachung des Hinweises auf die Patenterteilung:
**14.11.2007 Patentblatt 2007/46**

(51) Int Cl.:
**F16D 48/06** (2006.01)

(21) Anmeldenummer: **05019194.9**

(22) Anmeldetag: **05.09.2005**

(54) **Verfahren zur Bestimmung eines Sollwertes für den Druck zur Ansteuerung einer hydrodynamischen Kupplung**

Method to determinate the target value for the pressure to control a hydrodynamic clutch

Méthode pour déterminer la valeur de consigne de la pression pour contrôler un accouplement hydrodynamique

(84) Benannte Vertragsstaaten:
**DE**

(30) Priorität: **03.09.2004 DE 102004042601**

(43) Veröffentlichungstag der Anmeldung:
**08.03.2006 Patentblatt 2006/10**

(73) Patentinhaber: **Voith Turbo GmbH & Co. KG
89522 Heidenheim (DE)**

(72) Erfinder: **Haußmann, Matthias
89561 Dischingen (DE)**

(74) Vertreter: **Dr. Weitzel & Partner
Friedenstrasse 10
89522 Heidenheim (DE)**

(56) Entgegenhaltungen:
**WO-A-02/18821          US-A1- 2002 134 637
US-B1- 6 594 573**

**Beschreibung**

Die Erfindung betrifft ein Verfahren zur Bestimmung des Sollwertes eines Druckes zur Ansteuerung einer hydrodynamischen Kupplung, im Einzelnen mit dem Merkmal aus dem Oberbegriff des Anspruches 1.

Verfahren zur Ermittlung des Sollwertes eines Druckes zur Ansteuerung einer hydrodynamischen Kupplung als Stellgröße sind in einer Vielzahl von Ausführungen aus dem Stand der Technik bekannt. Diese basieren in der Regel auf einer Vorsteuerung in Form einer sogenannten Druckvorgabe, die einen Sollwert $p_{Soll}$ für den Gehäusedruck der hydrodynamischen Kupplung liefert. Diese Vorsteuerung wird dabei in der Regel über ein inverses Kupplungsmodell realisiert, um einen geeigneten Vorgabewert des einzustellenden Drucks $p_{Soll}$ zu erhalten. Die Entwicklung dieses inversen Modells ist sehr aufwendig, da an jedem Arbeitspunkt der hydrodynamischen Kupplung die Druckvorgabe möglichst exakt erfolgen muss, um das gewünschte zu übertragende Moment, d. h. das am als Turbine fungierenden Schaufelrad, in der Regel des Sekundärrades, einstellen zu können. Verarbeitet werden dabei wenigstens ein Sollwert für wenigstens eine, die Arbeitsweise der hydrodynamischen Kupplung wenigstens mittelbar charakterisierende Größe. Dieser wird in der Regel vom zu übertragenden Moment gebildet. Die Sollwertvorgabe erfolgt dabei entweder über die Auswertung eines Fahrerwunschsignals und/oder über weitere in Abhängigkeit der Betriebsweise ermittelte Größen. Ferner wird zur Nutzung des inversen Kupplungsmodells die aktuelle Ist-Drehzahl n am Primärrad der hydrodynamischen Kupplung ermittelt. Diese bildet die Kupplungseingangsdrehzahl. Der Sollwert für das zu übertragende Moment $M_{Soll}$ wird dabei in der Regel von höherer Instanz, beispielsweise einer übergeordneten Fahrsteuerung, vorgegeben. Aus diesen Werten wird über das inverse Modell der Druckwert $p_{Soll}$ ermittelt, der zur Ansteuerung der Turbokupplung dient. Der Nachteil besteht wie bereits ausgeführt darin, dass die Druckvorgabe in jedem Arbeitspunkt der Kupplung möglichst exakt erfolgen muss. Die Invertierung eines vorhandenen Kupplungsmodells ist kompliziert und aufwendig.

Das Dokument US-B1-6 594 573 beschreibt ein Verfahren, dessen Merkmale im Oberbegriff von Anspruch 1 zusammengefasst sind.

Der Erfindung liegt daher die Aufgabe zugrunde, ein Verfahren zur Bestimmung des Sollwertes für den Druck, insbesondere den Gehäusedruck einer hydrodynamischen Kupplung zur Ansteuerung dieser zu vereinfachen und das gewünschte Sollmoment bzw. die zu übertragende Leistung exakt einzustellen. Dabei soll auf die aufwendige Entwicklung eines sogenannten inversen Kupplungsmodelles verzichtet werden und dennoch das am Sekundärrad vorliegende Moment, d. h. das über die hydrodynamische Kupplung übertragbare Moment, auch im dynamischen Fall exakt nach Vorgabe einstellen zu können.

Die erfindungsgemäße Lösung ist durch die Merkmale des Anspruchs 1 charakterisiert. Vorteilhafte Ausgestaltungen sind in den Unteransprüchen beschrieben.

Erfindungsgemäß erfolgt die Bestimmung einer Soll- Stellgröße, insbesondere in Form eines Sollwertes $p_{Soll}$ für den Druck zur Ansteuerung einer hydrodynamischen Kupplung, umfassend ein Primärrad und ein Sekundärrad, die miteinander einen mit Betriebsmittel befüllbaren Arbeitsraum bilden aus einem aus einer Soll-Vorgabe nach Einstellung oder Änderung des Übertragungsverhaltens der hydrodynamischen Kupplung beliebigen Wert für einen Vorsteuerdruck $p_{vorst}$, der durch eine Modell basierte Regelung korrigiert wird. Die Soll-Stellgröße in Form des Sollwertes für den Druck $p_{Soll}$ zur Ansteuerung der hydrodynamischen Kupplung wird durch Addition oder Subtraktion des Vorsteuerdruckes $p_{Vorst}$ mit einem Korrekturwert $p_{Korr}$ gebildet, wobei der Korrekturwert $p_{Korr}$ aus der Abweichung einer auf der Grundlage des Vorsteuerdruckes $p_{Vorst}$ mit dem Kupplungsmodell ermittelten theoretischen Istgröße einer das Übertragungsverhalten der hydrodynamischen Kupplung wenigstens mittelbar beschreibenden Größe und dem Sollwert dieser Größe aus der Soll-Vorgabe nach Einstellung oder Änderung des Übertragungsverhaltens der hydrodynamischen Kupplung bestimmt wird. $P_{Korr}$ ergibt sich aus dem Vorsteuerdruck und fungiert als Stellgröße, die der Regler in Abhängigkeit der Regeldifferenz $M_{soll} - M_{ist}$ ausgibt, wobei $M_{ist}$ die Ausgangsgröße des Kupplungsmodells ist.

Die erfindungsgemäße Lösung bietet den Vorteil eines geringeren Aufwandes bei der Implementierung der Sollwertvorgabe. Es genügt eine näherungsweise Vorgabe eines Vorsteuerdruckwertes, der durch einen Regler weiter korrigiert wird. In Abhängigkeit der Genauigkeit des Modells können dabei mit dieser Lösung sehr schnell sehr genaue Soll-Stellgrößenvorgaben erfolgen.

Die Vorgabe nach Einstellung oder Änderung des Übertragungsverhaltens beinhaltet wenigstens eine, vorzugsweise wenigstens zwei, die gewünschte Betriebsweise der hydrodynamischen Kupplung wenigstens mittelbar beschreibende Größen.

Bezüglich der Ausführung des Kupplungsmodells bestehen mehrere Möglichkeiten. Die Istgrößen der das Übertragungsverhalten der hydrodynamischen Kupplung wenigstens mittelbar beschreibenden Größen können dabei

- berechnet
- aus Kennfeldern oder Kennlinien abgeleitet
- tabellarisch erfasst

e.t.c. sein

Die das Übertragungsverhalten der hydrodynamischen Kupplung wenigstens mittelbar beschreibenden Größen beinhalten dabei wenigstens eine der nachfolgend genannten Größen:

- das übertragbare Moment
- die Drehzahl des Pumpenrades und/oder des Turbinenrades
- das übertragbare Moment oder die Drehzahl des Pumpenrades und/oder Turbinenrades wenigstens mittelbar beschreibende Größen.

Grundsätzlich können zwei grundlegende Verfahren für die Modell basierende Regelung unterschieden werden. Gemäß einem ersten Lösungsansatz wird aus dem Vorsteuerdruck $p_{Vorst}$, mit dem Kupplungsmodell eine theoretische Istgröße für das übertragbare Moment ermittelt. Die theoretische Istgröße für das übertragbare Moment wird mit dem vorgegebenen Sollwert für das übertragbare Moment aus der Soll-Vorgabe verglichen wird und bei Abweichung ein Korrekturwert $p_{Korr}$ für den Vorsteuerdruck ermittelt wird, welcher durch Addition oder Subtraktion mit dem beliebigen Vorsteuerdruck $p_{Vorst}$, als Soll-Stellgröße $p_{Soll}$ für den Druck gesetzt. Aus der Soll-Stellgröße $p_{Soll}$ wird wiederum mit dem Kupplungsmodell die sich ergebende theoretische Istgröße für das übertragbare Moment ermittelt und die theoretische Istgröße für das übertragbare Moment mit dem vorgegebenen Sollwert für das übertragbare Moment aus der Soll-Vorgabe verglichen, wobei bei Abweichung der Korrekturwert $p_{Korr}$ für den Vorsteuerdruck verändert wird und eine neue Soll-Stellgröße ermittelt wird. Dieser Verfahrensschritt wird solange wiederholt, bis keine oder eine in einem Toleranzbereich liegende Abweichung der theoretischen Istgröße für das zu übertragende Moment vom Sollwert der Soll-Vorgabe vorliegt.

Entsprechend eines zweiten Lösungsansatzes wird aus einer Soll-Vorgabe nach Einstellung oder Änderung des Übertragungsverhaltens der hydrodynamischen Kupplung ebenfalls zuerst ein beliebiger Wert für einen Vorsteuerdruck $p_{vorst}$ vorgegeben. Aus dem Vorsteuerdruck $p_{Vorst}$, wird mit dem Kupplungsmodell eine theoretische Istgröße für die sich einstellende Leistungszahl $\lambda$ an der hydrodynamischen Kupplung ermittelt. Die theoretische Istgröße für die Leistungszahl wird mit einem aus der Soll-Vorgabe nach Einstellung oder Änderung des Übertragungsverhaltens sich ergebenden Sollwert für die Leistungszahl $\lambda$ verglichen wird und bei Abweichung ein Korrekturwert $p_{Korr}$ für den Vorsteuerdruck ermittelt, welcher durch Addition oder Subtraktion mit dem beliebigen Vorsteuerdruck $P_{Vorst}$, als Soll-Stellgröße $p_{Soll}$ für den Druck gesetzt wird. Aus der Soll-Stellgröße $p_{Soll}$ wird mit dem Kupplungsmodell die sich ergebende theoretische Istgröße für die Leistungszahl ermittelt und mit dem aus der Soll-Vorgabe nach Einstellung oder Änderung des Übertragungsverhaltens sich ergebenden Sollwert für die Leistungszahl $\lambda$ verglichen, wobei bei Abweichung der Korrekturwert $p_{Korr}$ für den Vorsteuerdruck verändert wird und eine neue Soll-Stellgröße ermittelt wird. Der letzte Verfahrensschritt wird solange wiederholt, bis keine oder eine in einem Toleranzbereich liegende Abweichung der theoretischen Istgröße für die Leistungszahl vom Sollwert der Soll-Vorgabe vorliegt.

Die erfindungsgemäße Lösung wird nachfolgend anhand von Figuren erläutert. Darin ist im einzelnen folgendes dargestellt:

Figur 1    verdeutlicht anhand eines Blockschaltbildes das Grundprinzip des erfindungsgemäßen Verfahrens;

Figur 2    verdeutlicht eine erste Ausführung einer Modell basierten Regelung mit Momentenregelung;

Figur 3    verdeutlicht eine zweite Ausführung einer Modell basierten Regelung mit -Regelung;

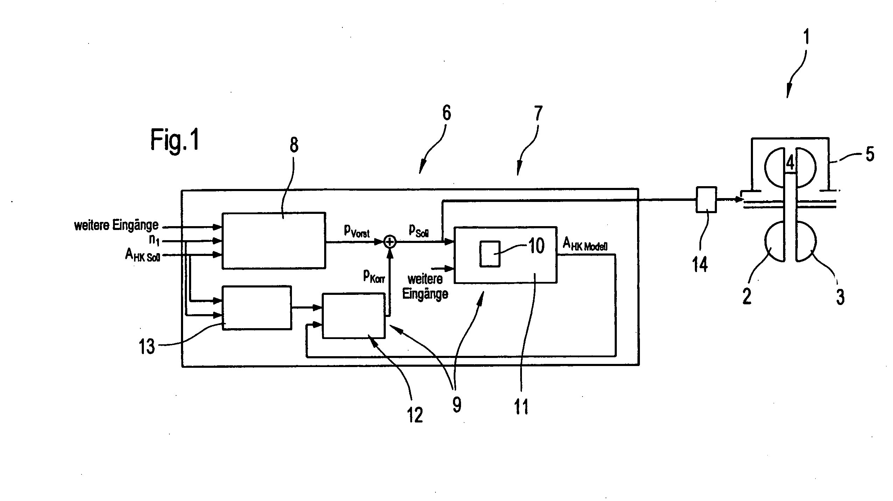

Die Figur 1 verdeutlicht in schematisch stark vereinfachter Darstellung anhand eines Blockschaltbildes und der Prinzipskizze einer einer hydrodynamischen Kupplung 1 zugeordneten Druckbestimmungseinheit 6 das Grundprinzip eines erfindungsgemäßen Verfahrens zur Bestimmung eines Sollwertes für den Druckwert, insbesondere den Solldruck $p_{Soll}$ für die Ansteuerung einer hydrodynamischen Kupplung 1, insbesondere der dieser zugeordneten Stelleinrichtung 14, umfassend mindestens ein Primärrad 2 und ein Sekundärrad 3, die miteinander einen mit Betriebsmittel befüllbaren Arbeitsraum 4 bilden. Die hydrodynamische Kupplung ist dabei frei von zusätzlichen Leiträdern und dient lediglich der Drehzahlwandlung und nicht der Drehmomentwandlung. Die hydrodynamische Kupplung 1 kann dabei je nach Ausführung mit einem ruhenden oder mit rotierendem Gehäuse 5 ausgestaltet sein. Unter den Druckwert, insbesondere dem Solldruck $p_{Soll}$ wird der Wert für den Gehäusedruck der hydrodynamischen Kupplung 1 verstanden. Dieser dient der Einstellung einer die Betriebsweise der hydrodynamischen Kupplung wenigstens mittelbar charakterisierenden Größe $A_{HK}$. Im einfachsten Fall fungiert als die die Betriebsweise der hydrodynamischen Kupplung 1 wenigstens mittelbar charakterisierende Größe $A_{HK}$ das am Sekundärrad 3, welches bei Leistungsübertragung im Traktionsbetrieb vom Primärrad 2 zum Sekundärrad 3 als Turbine fungiert, aufgenommene bzw. abgegebene Moment $M_{Turbine}$. Denkbar ist des weiteren die am Sekundärrad 3, insbesondere am in diesem Zustand als Turbinenrad fungierenden Schaufelrad anliegende Drehzahl $n_{Turbine}$ oder eine der nachfolgenden, diese Größen wenigstens indirekt charakterisierende Größen:

$M_{auf}$ = von der hydrodynamischen Kupplung, insbesondere dem Primärrad 2 aufnehmbares Moment
$P_{auf}$ = die von der hydrodynamischen Kupplung aufnehmbare Leistung
$P_{ab}$ = die von der hydrodynamischen Kupplung abgebbare Leistung

Diese Größen sind nur beispielhaft genannt. Denkbar ist jegliche, die Betriebsweise der hydrodynamischen Kupplung 1 wenigstens mittelbar, d. h. direkt oder indirekt über weitere funktionale Zusammenhänge charakterisierende Größen.

Der hydrodynamischen Kupplung 1 ist eine Druckbestimmungseinheit 6 zugeordnet. Diese kann Bestandteil einer der hydrodynamischen Kupplung 1 zugeordneten Steuer- und/oder Regeleinrichtung 7 oder einer, einer anderen Komponente in einem Antriebsstrang zugeordneten und von der hydrodynamischen Kupplung 1 mit genutzten Steuer- und/oder Regeleinrichtung sein. In der dargestellten Ausführung ist die Druckbestimmungseinheit 6 als eigenständige Einheit wiedergegeben. Diese umfasst eine Druckvorsteuerungseinheit 8, die funktional mit einer Steuer- und/oder Regelvorrichtung 9 zur modellbasierten Regelung gekoppelt ist. Über die Druckvorsteuereinheit 8 erfolgt dabei die Vorgabe eines Vorsteuerdruckwertes $p_{Vorst}$. Verarbeitet werden dazu vorzugsweise wenigstens zwei, die Betriebsweise der hydrodynamischen Kupplung 1 wenigstens indirekt charakterisierende Größen. Vorzugsweise wird eine dieser Größen von einer, die Drehzahl $n_2$ des Primärrades wenigstens indirekt charakterisierenden Größe gebildet. Diese beschreibt dabei die sogenannte Eingangsdrehzahl an der hydrodynamischen Kupplung 1 und ist wenigstens proportional zur Drehzahl an der mit der hydrodynamischen Komponente wenigstens mittelbar gekoppelten Antriebsmaschine. Ferner wird eine, die gewünschte Betriebsweise der hydrodynamischen Kupplung wenigstens mittelbar charakterisierende Größe, die sich beispielsweise aus einem Fahrerwunsch ergibt, vorgegeben. Bei dieser Größe handelt es sich vorzugsweise um das über die hydrodynamische Kupplung 1 zu übertragende und am Sekundärrad 3 bzw. dem Turbinenrad abgebbare Moment $M_{Soll}$. Aus diesem wird über die Druckvorsteuereinheit 8 der Vorsteuerdruck $p_{Vorst}$ bestimmt. Die entsprechenden Größen werden dabei über Einrichtungen zur wenigstens indirekten Erfassung dieser ermittelt und der Druckbestimmungseinheit 6 als Eingangsgröße zugeführt. Zu diesem Zweck ist diese wenigstens mittelbar mit den Einrichtungen verbunden. Die Verbindung kann dabei über feste Leitungswege erfolgen oder aber drahtlos. Ferner wird aus dem Sollwert $M_{Soll}$, der vorzugsweise einem Fahrerwunsch entspricht oder aber beispielsweise von einer Steuerung zur Steuerung der Betriebsweise eines Getriebes, in welchem die hydrodynamische Kupplung 1 integriert ist, ermittelt. Die die Betriebsweise der hydrodynamischen Kupplung 1 wenigstens indirekt charakterisierende Größe, insbesondere der Sollwert $M_{Soll}$ für das von der hydrodynamischen Kupplung 1 zu übertragende Moment wird der Steuer-und/oder Regeleinrichtung 9 zugeführt. In Abhängigkeit des über die Druckvorsteuereinheit 8 vorgegebenen Vorsteuerdruckes $p_{Vorst}$ wird über eine Zuordnungseinheit 10 in der Steuer- und/oder Regelvorrichtung 9 die sich an der hydrodynamischen Kupplung 1 infolge des Vorsteuerdruckes $p_{Vorst}$ einstellende und die Arbeitsweise der hydrodynamischen Kupplung wenigstens mittelbar beschreibende Größe $A_{HKModell}$ ermittelt und über einen Regler 11 mit dem vorgegebenen Sollwert $M_{Soll}$ verglichen. Im Ergebnis wird als Stellgröße ein Korrekturwert $p_{Korr}$ für den an der hydrodynamischen Kupplung einzustellenden Druck vorgegeben, der mit dem Vorsteuerdruck $p_{vorst}$ den Drucksollwert $p_{Soll}$ bildet. Dieser Sollwert $p_{Soll}$ wird dann zur Ansteuerung der hydrodynamischen Kupplung 1 verwendet bzw. es wird aus diesem die entsprechende Stellgröße zur Ansteuerung der Stelleinrichtung der hydrodynamischen Kupplung ermittelt.

Die Figur 1 verdeutlicht allgemein das Grundprinzip des erfindungsgemäßen Verfahrens, bei welchem der Sollwert für den an der hydrodynamischen Kupplung 1 einzustellenden Druck $p_{Soll}$ durch Addition aus einem beliebigen Vorsteuerdruck $p_{vorst}$, der sich aus wenigstens einer, vorzugsweise wenigstens zwei, die gewünschte Betriebsweise der hydrodynamischen Kupplung 1 wenigstens mittelbar beschreibenden Größen bestimmt und einem sich aus diesem am Kupplungsmodell ergebenden Korrekturwert $p_{Korr}$ gebildet. Die Ermittlung der Modellgröße kann dabei unterschiedlich erfolgen. Im einfachsten Fall wird diese über vorgegebene bzw. abgespeicherte Kennlinien oder Berechnungsalgorithmen ermittelt.

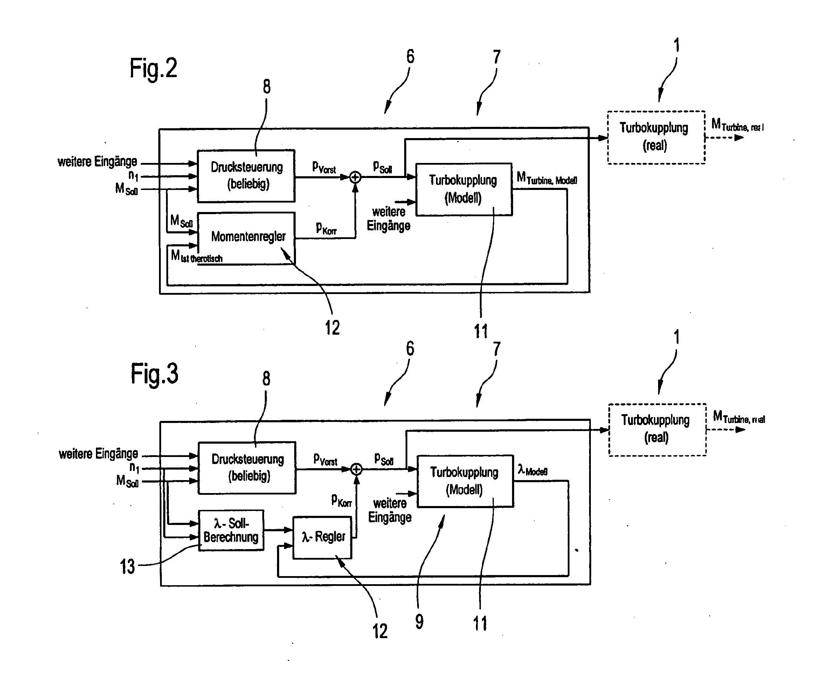

Die Figur 2 verdeutlicht anhand des Blockschaltbildes gemäß Figur 1 die Ausbildung der modellbasierten Regelung als modellbasierte Momentenregelung. Bei dieser erfolgt ebenfalls an der Druckvorsteuereinheit 8 aufgrund der Vorgabe wenigstens zweier, die Betriebsweise der hydrodynamischen Kupplung 1 wenigstens mittelbar charakterisierenden Größe, vorzugsweise $n_2$ als Eingangs- bzw. Pumpendrehzahl und $M_{Soll}$ als das über die hydrodynamische Kupplung 1 übertragbare Moment. Vorzugsweise können jedoch auch weitere Größen mit verarbeitet werden. Aus diesen wird über die Druckvorsteuerungseinheit 8 ein Vorsteuerdruck $p_{vorst}$ ermittelt. Dieser fungiert wenigstens mittelbar als Eingangsgröße für die modellbasierte Regelung. Dabei wird entsprechend dem Vorsteuerdruck $p_{Vorst}$ und einen durch die modellbasierte Regelung sich ergebenden Korrekturwerte $p_{Korr}$ das übertragbare Moment $M_1$, welches dem von der Turbine, d. h. dem Sekundärrad 2 aufnehmbaren Moment $M_{Turbine-Modell}$ entspricht, ermittelt und als theoretischer Ist-Wert $M_{Ist-theoretisch}$ dem in der Steuer-und/oder Regelvorrichtung 9 integrierten Momentenregler 11 zugeführt. In diesem erfolgt ein Abgleich mit der sich aus dem Fahrerwunsch oder einem Wunsch nach Änderung des Betriebszustandes ergebenden Sollgröße, hier $M_{Soll}$ für das an der hydrodynamischen Kupplung einzustellende übertragbare Moment verglichen. Bei Abweichung zwischen dem theoretisch ermittelten sich an der hydrodynamischen Kupplung einstellenden übertragbaren Moment $M_{Ist-theoretisch}$ und dem vorgegebenen Sollwert $M_{Soll}$ wird als Stellgröße ein entsprechender Korrekturdruck $p_{Korr}$ ermittelt. Dieser wird mit dem Vorsteuerdruck $p_{Vorst}$ addiert. Die Summe bestimmt den tatsächlich an der hydrodynamischen Kupplung 1 einzustellenden Druckwert $p_{Soll}$. Dieser wird dann als Ausgangsgröße der Druckbestimmungseinheit 6 der hydrodynamischen Kupplung 1 bzw. der dieser zugeordneten Stelleinrichtung als Stellgröße zugeführt oder es wird aus dieser die entsprechende Stellgröße je nach Ausbildung der Stelleinrichtung ermittelt. In Abhängigkeit des so über die Druckbestimmungseinheit 6 vorgegebenen Drucksollwert $p_{Soll}$ ergibt sich das dann an der hydrodynamischen Kupplung 1 real übertragbare Moment $M_{Turbine-real}$. Die Summe aus Vorsteuerdruck $p_{Vorst}$ und Korrektur $p_{Korr}$ dient damit sowohl als Stellgröße für die real existierende hydrodynamische Kupplung 1 als auch Eingangsgröße für das enthaltene Kupplungsmodell an der Modelleinheit. Dieses Kupplungsmodell ist im Gegensatz zum inversen Modell aus dem Stand der Technik relativ schnell und einfach zu ermitteln. Es kann dabei ein algebraisches Modell oder aber auch ein Modell, welches sich aus einer oder mehreren Kennlinien zusammensetzt, angewandt werden.

Gegenüber der Ausführung aus der Figur 2 verdeutlicht die Figur 3 eine weitere zweite mögliche Variante einer modellbasierten Regelung in Form einer λ-Regelung. Hierbei wird aus dem Sollmoment $M_{Soll}$ für das an der hydrodynamischen Kupplung 1 zu übertragende Moment und der Eingangsdrehzahl, d. h. der Drehzahl $n_2$ am Primärrad sowie eventuell weiterer konstanter Parameter die Größe λ berechnet, welche ein Maß für das übertragbare Moment einer hydrodynamischen Kupplung ist. λ ergibt sich dabei aus folgenden Größen:

$$\lambda = \frac{M_{Turbine}}{\rho_{Ol} \cdot D^5 \cdot w^2}$$

mit

$$\omega = \frac{2II}{60} \cdot n_1$$

bzw.

$$\lambda_{Soll} = \frac{M_{Turbine-soll}}{\rho_{Ol} \cdot D^5 \cdot \omega^2}$$

mit

$$\omega = \frac{2II}{60} n_1$$

wobei

$p_{Öl}$ die Dichte des Öls in der hydrodynamischen Kupplung D dem Torusdurchmesser Ω der Kreisfrequenz und $n_1$ der Eingangs- bzw. Primärrehzahl entspricht. Auch hier umfasst die Druckbestimmungseinheit 6 einen Druckvorsteuereinheit 8 und eine Steuer- und/oder Regelvorrichtung 9, die mit der Druckvorsteuereinheit 8 gekoppelt ist. Diese Steuer- und/oder Regelvorrichtung 9 umfasst eine Modelleinheit 11 sowie wenigstens einen Regler 12. Auch hier werden als Eingangsgrößen der Druckbestimmungseinheit 6 wieder wenigstens eine, einen gewünschten Betriebszustand der hydrodynamischen Kupplung 1 wenigstens mittelbar charakterisierende Größe, vorzugsweise als über die hydrodynamische Kupplung zu übertragenden Sollmoment $M_{Soll}$ zugeführt. Ferner berücksichtigt wird die aktuelle Drehzahl am Primärrad 2 $n_2$ sowie eventuell weitere Parameter. Aus dieser werden über die Druckvorsteuerungseinheit 8 der Vorsteuerdruck $p_{Vorst}$ ermittelt. Aus dem gewünschten einzustellenden Sollwert für das übertragbare Moment $M_{Soll}$ wird der λ wert der hydrodynamischen Kupplung 1 berechnet. Dafür ist eine entsprechende Berechnungseinheit 13 zur λ-Sollwertberechnung vorgesehen. Dieser Sollwert wird dann dem λ-Regler 12 zugeführt. Der λ-Regler 12 verarbeitet ferner den von der Modelleinheit 11 ermittelten Modellwert $\lambda_{Modell}$ für die hydrodynamische Kupplung 1. Bei Abweichung ist es erforderlich, die Stellgröße der hydrodynamischen Kupplung 1 entsprechend zu ändern. Dies erfolgt durch Vorgabe eines entsprechenden Korrekturwertes $p_{Korr}$ für den einzustellenden Druck. Dieser bildet zusammen mit dem vorgegebenen Vorsteuerdruck $p_{Vorst}$ den Sollwert für den in der hydrodynamischen Kupplung 1 einzustellenden Druck $p_{Soll}$. Gleichzeitig fungiert dieser Sollwert wiederum als Eingangsgröße der Modelleinheit 11 zur Bestimmung des theoretischen sich einstellenden λ Wertes $\lambda_{Modell}$, der dem λ-Regler 12 zugeführt wird.

Über die Art des jeweiligen verwendeten Reglers 11 wird keine konkrete Aussage getroffen. Bei diesem kann es sich beispielsweise um ein P, Pi oder Pid-Regler handeln. Andere Ausführungen sind ebenfalls denkbar.

Die erfindungsgemäße Lösung bietet den Vorteil eines geringeren Aufwandes bei der Implementierung der Sollwertvorgabe dadurch, dass nicht mehr zwingend ein inverses Modell für die hydrodynamische Kupplung gebildet werden muss. Die Druckvorsteuerung, insbesondere aus der Druckvorsteuereinheit, muss lediglich ein näherungsweise guter Wert für $p_{Vorst}$ geliefert werden. Der jeweilige Regler sorgt für die Korrektur des Vorsteuerdruckes $p_{Vorst}$, wodurch je nach Einstellung des implementierten Kupplungsmodelles mit der Realität exakt der benötigte Ansteuersolldruck $p_{Soll}$ für das gewünschte einzustellende und übertragende Sollmoment $M_{Soll}$ ausgegeben wird Abweichungen des implementierten Kupplungsmodells können gegebenenfalls mit einem weiteren überlagerten Regler ausgeglichen werden.

Bezugszeichenliste

| | |
|---|---|
| 1 | Hydrodynamische Kupplung |
| 2 | Primärrad |
| 3 | Sekundärrad |
| 4 | Arbeitsraum |
| 5 | Gehäuse |
| 6 | Druckbestimmungseinheit |
| 7 | Steuer- und/oder Regeleinheit |
| 8 | Druckvorsteuerungseinheit |
| 9 | Steuer und/oder Regeleinrichtung |
| 10 | Zuordnungseinheit |
| 11 | Modelleinheit |
| 12 | Regler |
| 13 | Berechnungseinheit |
| $p_{Vort}$ | Vorsteuerdruck |
| $p_{Soll}$ | Sollwert des einzustellenden Druckes |
| $p_{Korr}$ | Druckkorrekturwert |
| $M_{Soll\text{-}theoretisch}$ | theoretischer über die Modelleinheit ermittelter Sollwert für das zu übertragende Moment |
| $A_{HK}$ | eine die Betriebsweise der hydrodynamischen Kupplung wenigstens mittelbar charakterisierende Größe |
| $M_{Soll}$ | Sollwert für das über die hydrodynamische Kupplung zu übertragende Moment |
| $n_2$ | Eingangsdrehzahl bzw. Drehzahl am Primärrad |

**Patentansprüche**

1. Verfahren zur Bestimmung einer Soll- Stellgröße, insbesondere in Form eines Sollwertes ($p_{Soll}$) für den Druck zur Ansteuerung einer hydrodynamischen Kupplung (1), umfassend ein Primärrad und ein Sekundärrad, die miteinander einen mit Betriebsmittel befüllbaren Arbeitsraum bilden;

    1.1 bei welchem aus einer Soll-Vorgabe nach Einstellung oder Änderung des Übertragungsverhaltens der hydrodynamischen Kupplung ein beliebiger Wert für einen Vorsteuerdruck ($p_{vorst}$) vorgegeben wird;

    1.2 bei welchem die Soll-Stellgröße in Form des Sollwertes für den Druck ($p_{Soll}$) zur Ansteuerung der hydrodynamischen Kupplung (1) durch Addition oder Subtraktion des beliebigen Vorsteuerdruckes ($p_{Vorst}$), mit einem sich aus diesem in einem theoretischen Kupplungsmodell ergebenden Korrekturwert ($p_{Korr}$) gebildet wird, wobei der Korrekturwert ($p_{Korr}$) aus der Abweichung einer auf der Grundlage des Vorsteuerdruckes ($p_{Vorst}$), mit dem Kupplungsmodell ermittelten theoretischen Istgröße einer das Übertragungsverhalten der hydrodynamischen Kupplung (1) wenigstens mittelbar beschreibenden Größe und dem Sollwert dieser Größe aus der Soll-Vorgabe nach Einstellung oder Änderung des Übertragungsverhaltens der hydrodynamischen Kupplung ermittelt wird; wobei

1.3 die das Übertragungsverhalten der hydrodynamischen Kupplung (1) wenigstens mittelbar beschreibenden Größen wenigstens eine der nachfolgend genannten Größen beinhalten:

- das übertragbare Moment
- die Drehzahl des Pumpenrades und/oder des Turbinenrades
- das übertragbare Moment oder die Drehzahl des Pumpenrades und/oder Turbinenrades wenigstens mittelbar beschreibende Größen;

**gekennzeichnet durch** die folgenden Merkmale:

1.4 aus einer Soll-Vorgabe wird nach Einstellung oder Änderung des Übertragungsverhaltens der hydrodynamischen Kupplung ein beliebiger Wert für einen Vorsteuerdruck ($p_{vorst}$) vorgegeben;

1.5 aus dem Vorsteuerdruck ($p_{Vorst}$) wird mit dem Kupplungsmodell eine theoretische Istgröße für das übertragbare Moment oder für die sich einstellende Leistungszahl ($\lambda$) an der hydrodynamischen Kupplung ermittelt;

1.6 die theoretische Istgröße für das übertragbare Moment oder für die Leistungszahl wird mit dem vorgegebenen Soll-Wert für das übertragbare Moment oder für die Leistungszahl ($\lambda$) aus der Soll-Vorgabe verglichen, und bei Abweichung wird ein Korrekturwert ($p_{Korr}$) für den Vorsteuerdruck ermittelt, welcher **durch** Addition oder Subtraktion mit dem beliebigen Vorsteuerdruck ($p_{Vorst}$) als Soll-Stellgröße ($p_{Soll}$) für den Druck gesetzt wird;

1.7 aus der Soll-Stellgröße ($p_{Soll}$) wird mit dem Kupplungsmodell die sich ergebende theoretische Istgröße für das übertragbare Moment oder für die Leistungszahl ermittelt, und die theoretische Istgröße wird für das übertragbare Moment oder für die Leistungszahl mit dem vorgegebenen Soll-Wert aus der Soll-Vorgabe verglichen, und bei Abweichung wird der Korrekturwert ($p_{Korr}$) für den Vorsteuerdruck verändert, und eine neue Soll-Stellgröße wird ermittelt;

1.8 der Verfahrensschritt 1.7 wird solange wiederholt, bis keine oder eine in einem Toleranzbereich liegende Abweichung der theoretischen Istgröße für das zu übertragende Moment oder für die Leistungszahl vom Soll-Wert der Soll-Vorgabe vorliegt.

**2.** Verfahren nach Anspruch 1, **dadurch gekennzeichnet, dass** die Soll-Vorgabe nach Einstellung oder Änderung des Übertragungsverhaltens aus wenigstens einer, vorzugsweise wenigstens zwei, die gewünschte Betriebsweise der hydrodynamischen Kupplung (1) wenigstens mittelbar beschreibenden Größen bestimmt wird.

**3.** Verfahren nach einem der Ansprüche 1 oder 2, **dadurch gekennzeichnet, dass** die Istgröße der das Übertragungsverhalten der hydrodynamischen Kupplung (1) wenigstens mittelbar beschreibenden Größe berechnet wird.

**4.** Verfahren nach einem der Ansprüche 1 oder 2, **dadurch gekennzeichnet, dass** die Istgröße der das Übertragungsverhalten der hydrodynamischen Kupplung (1) wenigstens mittelbar beschreibenden Größe aus einer Kupplungskennlinie oder einem Kupplungskennfeld ermittelt wird.

**Claims**

**1.** A method for determining a setpoint actuating variable, especially in the form of a setpoint value ($p_{soll}$) for the pressure for triggering a hydrodynamic coupling (1), comprising a primary wheel and a secondary wheel which jointly form a working chamber which can be filled with operating medium;

1.1. in which a random value for a pilot pressure ($p_{vorst}$) is predetermined from a setpoint default value after setting or changing the transmission behavior of the hydrodynamic coupling;

1.2. in which the setpoint actuating variable in the form of the setpoint value for the pressure ($p_{soll}$) for triggering the hydrodynamic coupling (1) is formed by addition or subtraction of the random pilot pressure ($p_{vorst}$), with a corrective value ($p_{korr}$) which is obtained from the same in a theoretical coupling model, with the corrective value ($p_{korr}$) being determined from the deviation of a theoretical actual value of a value describing the transmission behavior of the hydrodynamic coupling (1) at least indirectly, which value is determined on the basis of the pilot pressure $p_{(vorst)}$ with the coupling model, and from the setpoint value of said value from the setpoint default value after setting or changing the transmission behavior of the hydrodynamic coupling,

1.3. with the variables which describe the transmission behavior of the hydrodynamic coupling (1) at least indirectly containing at least one of the following mentioned variables:

- the transmittable moment;
- the speed of the pump wheel and/or the turbine wheel;
- the variables describing at least indirectly the transmittable moment or the speed of the pump wheel and/or the turbine wheel;

**characterized by** the following features:

1.4. a random value for a pilot pressure ($p_{vorst}$) is predetermined from a setpoint default value after setting or changing the transmission behavior of the hydrodynamic coupling;

1.5. a theoretical actual value for the transmittable moment or for the coefficient of performance ($\lambda$) is determined in the hydrodynamic coupling from the pilot pressure ($p_{vorst}$) with the coupling model;

1.6. the theoretical actual value for the transmittable moment or for the coefficient of performance is compared with the predetermined setpoint value for the transmittable moment or for the coefficient of performance ($\lambda$) from the setpoint default value, and in the event of deviation a corrective value ($p_{korr}$) is determined for the pilot pressure ($p_{vorst}$) which is set as a setpoint actuating variable ($p_{soll}$) for the pressure by addition or subtraction with the random pilot pressure ($p_{vorst}$);

1.7. the resulting theoretical actual value for the transmittable moment or for the coefficient of performance is determined from the setpoint actuating variable ($p_{soll}$) with the coupling model, and the theoretical actual value is compared with the predetermined setpoint value from the setpoint default value, and in the event of deviation the corrective value ($p_{korr}$) for the pilot pressure is changed and a new setpoint actuating variable is determined;

1.8. the process step 1.7 is repeated until there is no deviation of the theoretical actual value for the moment to be transmitted or one which lies within a tolerance range or for the coefficient of performance from the setpoint value of the setpoint default value.

**2.** A method according to claim 1, **characterized in that** the setpoint default value is determined after setting or changing the transmission behavior from at least one, preferably two variables which describe at least indirectly the desired operating mode of the hydrodynamic coupling (1).

**3.** A method according to one of the claims 1 or 2, **characterized in that** the actual value of the variable is calculated which describes at least indirectly the transmission behavior of the hydrodynamic coupling (1).

**4.** A method according to one of the claims 1 or 2, **characterized in that** the actual value of the variable which describes at least indirectly the transmission behavior of the hydrodynamic coupling (1) is determined from a coupling characteristic or characteristic diagram.

**Revendications**

**1.** Procédé pour déterminer une grandeur réglante de consigne, spécialement sous la forme d'une valeur de consigne ($P_{soll}$) de la pression pour la commande d'un accouplement hydrodynamique (1), comportant une roue primaire et une roue secondaire, qui constituent ensemble une chambre de travail pouvant être remplie d'un fluide ;

1.1 pour lequel, à partir d'une consigne, après réglage ou modification du comportement de transmission dudit accouplement hydrodynamique (1), une valeur choisie de la pression pilote ($P_{vort.}$) est déterminée ;

1.2 pour lequel la grandeur réglante de consigne sous la forme d'une valeur de consigne ($P_{soll}$) de la pression pour la commande dudit accouplement hydrodynamique (1) est formée par addition ou soustraction d'une valeur choisie de la pression pilote ($P_{vort.}$), avec une valeur de correction ($P_{Korr}$), résultant de celui-ci dans un modèle théorique de l'accouplement, la valeur de correction ($P_{Korr}$) étant déterminée à partir de l'écart d'une grandeur réelle théorique, déterminée avec le modèle de l'accouplement sur la base de la pression pilote ($P_{vort.}$), d'une grandeur décrivant au moins médiatement le comportement de transmission dudit accouplement hydrodynamique (1) par rapport à la valeur de consigne de cette grandeur de consigne après réglage ou modification du comportement de transmission dudit accouplement hydrodynamique ;

1.3 les grandeurs, qui décrivent au moins médiatement le comportement de transmission dudit accouplement hydrodynamique (1), comportant au moins une des grandeurs citées ci-dessous

- le couple transmissible
- la vitesse de rotation de l'impulseur et/ou de la turbine réceptrice
- les grandeurs décrivant au moins médiatement le moment transmissible ou la vitesse de rotation de l'impulseur et/ou de la turbine réceptrice,

**caractérisé par** les caractéristiques suivantes :

1.4 à partir d'une consigne, on spécifie, après réglage ou modification du comportement de transmission dudit accouplement hydrodynamique, une valeur quelconque de la de la pression pilote ($P_{vort.}$) ;

1.5 à partir de la pression pilote ($P_{vort.}$), on détermine avec le modèle de l'accouplement une grandeur réelle théorique pour le couple transmissible ou pour le coefficient de performance ($\lambda$) se réglant audit accouplement hydrodynamique ;

1.6 la grandeur réelle théorique pour le couple transmissible ou pour le coefficient de performance est comparée à la valeur de consigne spécifiée pour le couple transmissible ou pour le coefficient de performance ($\lambda$) résultant de la consigne, et, en cas d'écart, on détermine une valeur de correction ($P_{Korr}$) de la pression pilote, laquelle est posée par addition ou soustraction d'une valeur choisie de la pression pilote ($P_{vort.}$), comme grandeur réglante de consigne ($P_{soll}$) de la pression ;

1.7 de la grandeur réglante de consigne ($P_{soll}$), on détermine avec le modèle de l'accouplement la grandeur réelle théorique résultant pour le couple transmissible ou le coefficient de performance et la grandeur réelle théorique pour le couple transmissible ou le coefficient de performance, la grandeur réelle théorique est comparée avec la valeur de consigne spécifiée de la consigne, et, en cas d'écart, la valeur de correction ($P_{Korr}$) est modifiée pour la pression pilote ($P_{vort.}$), et une nouvelle grandeur réglante de consigne est déterminée ;

1.8 l'étape 1.7 du processus est répété jusqu'à ce qu'à ce qu'on ait atteint un écart nul ou se situant dans le domaine de tolérance de la grandeur réelle théorique de la valeur de consigne pour le couple transmissible ou pour le coefficient de performance ($\lambda$).

2. Procédé selon la revendication 1, **caractérisé en** ceci que la consigne après réglage ou modification du comportement de transmission de l'accouplement hydrodynamique est déterminée à partir d'au moins une, de préférence deux grandeurs décrivant au moins médiatement le mode de fonctionnement voulu dudit accouplement hydrodynamique (1).

3. Procédé selon une des revendications 1 ou 2, **caractérisé en** ceci que la grandeur réelle décrivant au moins médiatement le mode de fonctionnement voulu dudit accouplement hydrodynamique (1) est calculée.

4. Procédé selon une des revendications 1 ou 2, **caractérisé en** ceci que la grandeur réelle décrivant au moins médiatement le mode de fonctionnement voulu dudit accouplement hydrodynamique (1) est déterminée à partir d'une courbe ou d'un champ de réponse de l'accouplement.

Fig.1

**Fig.2**

Turbokupplung (real) — 1 — $M_{Turbine, real}$

weitere Eingänge, $n_1$, $M_{Soll}$

8 — Drucksteuerung (beliebig) — $p_{Vorst}$

$M_{Soll}$ — Momentenregler — 12 — $M_{Ist\ theoretisch}$ — $p_{Korr}$

6 — $p_{Soll}$

7 — Turbokupplung (Modell) — weitere Eingänge — 11 — $M_{Turbine, Modell}$

**Fig.3**

Turbokupplung (real) — 1 — $M_{Turbine, real}$

weitere Eingänge, $n_1$, $M_{Soll}$

8 — Drucksteuerung (beliebig) — $p_{Vorst}$

$\lambda$- Soll-Berechnung — 13 — $\lambda$- Regler — 12 — $p_{Korr}$

6 — $p_{Soll}$

7 — Turbokupplung (Modell) — 9 — weitere Eingänge — 11 — $\lambda_{Modell}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6594573 B1